# EUROPÄISCHE PATENTSCHRIFT

(11) **EP 1 091 826 B1**
(45) Veröffentlichungstag und Bekanntmachung des Hinweises auf die Patenterteilung: **10.11.2004**
(21) Anmeldenummer: 00929426.5
(22) Anmeldetag: 26.04.2000
(51) Int. Cl.: B23Q 5/04, B23B 29/24

(54) **WERKZEUGANORDNUNG FÜR ROTIEREND ANGETRIEBENE WERKZEUGE**
TOOL ASSEMBLY FOR ROTATIONALLY DRIVEN TOOLS
ENSEMBLE SUPPORT D'OUTILS POUR OUTILS ENTRAINES EN ROTATION

(30) Priorität: 28.04.1999 DE 19919238
(43) Veröffentlichungstag der Anmeldung: 18.04.2001
(73) Patentinhaber: Traub Drehmaschinen GmbH, 73262 Reichenbach (DE)
(72) Erfinder: FORST, Heinz, D-73773 Aichwald (DE)
(74) Vertreter: HOEGER, STELLRECHT & PARTNER Patentanwälte
(86) Internationale Anmeldenummer: PCT/EP2000/003719
(87) Internationale Veröffentlichungsnummer: WO 2000/066318

(56) Entgegenhaltungen:
- EP-A- 0 799 663
- DE-B- 1 160 711
- US-A- 4 828 049

## Beschreibung

Die Erfindung betrifft eine Werkzeuganordnung für rotierend angetriebene Werkzeuge von Werkzeugmaschinen, umfassend einen Werkzeughalter für das rotierend angetriebene Werkzeug mit einem Werkzeughaltergehäuse in welchem eine Werkzeugspindel drehbar gelagert ist und einen Werkzeugträger mit einer an dem Werkzeugträger vorgesehenen Aufnahme für mindestens einen der Werkzeughalter, mit einem am Werkzeugträger vorgesehenen, um eine Zahnkranzachse auf einer ersten Bahn umlaufend bewegbaren ersten Zahnkranz, wobei die erste Bahn einen einer Zahnradachse nächstliegenden ersten Eingriffbereich für ein werkzeughalterseitiges Zahnrad aufweist, mit einem an dem Werkzeugträger ein um die Zahnkranzachse auf einer zweiten Bahn umlaufend bewegbaren zweiten Zahnkranz, wobei die zweite Bahn einen der Zahnradachse nächstliegenden zweiten Eingriffbereich für ein werkzeughalterseitiges Zahnrad aufweist, der in einem größeren radialen Abstand von der Zahnradachse verläuft als der erste Eingriffbereich und der in Richtung der Zahnradachse näher an der Werkzeugaufnahme des Werzeughalters liegt als der erste Eingriffbereich.

Eine derartige Werkzeuganordnung gemäß dem Oberbegriff des Anspruchs 1 ist aus der DE 1 160 711 A bekannt.

Aus des EP 0 799 663 A ist eine weitere Werkzeuganordnung bekannt, bei der ein Zahnrad eines Werkzeughalters über einen im Werkzeugträger angeordneten Zahnkranz angetrieben wird.

Damit besteht hinsichtlich des durch den Zahnkranz und das Zahnrad gebildetes Getriebes keine Möglichkeit, einer Anpassung der Übersetzungsverhältnisse bei unterschiedlichen Drehzahlen und Drehmomenten.

Aus diesem Grund wurden bislang innerhalb der Werkzeughalter zusätzliche Getriebe vorgesehen, die einerseits aufgrund der zur Verfügung stehenden Baugröße instabil waren und außerdem zusätzliches Flankenspiel und somit Ungenauigkeiten hinsichtlich der Drehposition des Werkzeugs mit sich gebracht haben.

Aus der DE 1 160 711 A ist ein Schnellwechselfilter bekannt, bei welcher unterschiedliche Übersetzungsverhältnisse für ein angetriebenes Werkzeug fest eingebaut sind.

Der Erfindung liegt die Aufgabe zugrunde, eine Werkzeuganordnung der gattungsgemäßen Art derart zu verbessern, daß eine Anpassung der Übersetzungsverhältnisse in einfacher Weise realisierbar ist.

Diese Aufgabe wird bei einem Werkzeugträger der eingangs beschriebenen Art erfindungsgemäß dadurch gelöst, daß der Werkzeughalter entweder mit einem ersten auf einer Seite des Werkzeughaltergehäuses angeordneten und um die Zahnradachse drehbar gelagerten werkzeughalterseitigen Zahnrad versehen ist, das mit dem ersten Zahnkranz in Eingriff bringbar ist oder mit einem zweiten auf einer Seite des Werkzeughaltergehäuses angeordneten und um die Zahnradachse drehbar gelagerten werkzeughalterseitigen Zahnrad versehen ist, das mit dem zweiten Zahnkranz in Eingriff bringbar ist.

Die erfindungsgemäße Lösung zeichnet sich durch ihre Einfachheit und Betriebssicherheit aus, da je nach Vorsehen eines ersten oder eines zweiten Zahnrads an dem Werkzeughalter unterschiedliche Übersetzungen für den Antrieb der Werkzeugspindel realisierbar sind.

Mit der erfindungsgemäßen Lösung ist eine einfache Möglichkeit geschaffen, verschiedene Übersetzungsverhältnisse für den Antrieb der Werkzeughalter zur Verfügung zu stellen, ohne daß die Zahl der erforderlichen Zahnräder erhöht wird.

Darüber hinaus ist diese Lösung äußerst stabil, da für das werkzeugseitige Zahnrad und die Zahnkränze ein Bauraum zur Verfügung steht, der größer ist als der in einem Werkzeughalter zur Verfügung stehende Bauraum.

Eine besonders vorteilhafte Lösung sieht vor, daß die am Werkzeughalter angeordneten Zahnräder gegeneinander auswechselbar sind, so daß ein erstes Zahnrad gegen ein zweites Zahnrad und ein zweites Zahnrad gegen ein erstes Zahnrad ausgewechselt werden können, so daß je nach speziellem Einsatzfall durch Auswechseln der Zahnräder eine Anpassung an das gewünschte Übersetzungsverhältnis zum Antrieb der Werkzeugspindel möglich ist.

Vorzugsweise ist dies dadurch realisierbar, daß sowohl das erste Zahnrad als auch das zweite Zahnrad auf einer mit der Werkzeugspindel gekoppelten Werkzeugantriebswelle auswechselbar fixierbar sind.

Besonders günstig läßt sich die erfindungsgemäße Lösung dann ausnutzen, wenn die Werkzeugantriebswelle an ihrem dem Werkzeughalter abgewandten Ende mit einem Kühlmittelzufuhranschluß versehen ist, welcher bei in der Aufnahme fixiertem Werkzeughalter mit einer am Werkzeugträger angeordneten Anschlußaufnahme verbunden ist.

Eine besonders günstige Lösung sieht vor, daß der Kühlmittelzufuhranschluß als Kühlmittelübertragungszapfen ausgebildet ist und somit in einfacher Weise gegenüber der Kühlmittelanschlußaufnahme mit der Werkzeugwelle rotieren kann, während die Kühlmittelanschlußaufnahme feststehend angeordnet ist.

Prinzipiell wäre es denkbar, daß die Werkzeugantriebswelle noch über ein zusätzliches Getriebeelement die Werkzeugspindel im Werkzeughalter antreibt. Eine besonders günstige Lösung sieht jedoch vor, daß die Werkzeugantriebswelle koaxial zur Werkzeugspindel angeordnet ist.

Insbesondere ist bei einer derartigen Lösung vorzugsweise vorgesehen, daß die Werkzeugantriebswelle und die Werkzeugspindel von einem gemeinsamen Kühlmittelkanal durchsetzt sind, welcher von dem Kühlmittelzufuhranschluß zu dem Werkzeug führt.

Prinzipiell wäre es denkbar, den ersten Zahnkranz und den zweiten Zahnkranz durch getrennte Antriebe anzutreiben und damit noch zusätzliche Variationsmöglichkeiten hinsichtlich des Antriebs des Werkzeugs zu schaffen.

Als besonders günstig im Hinblick auf eine einfache und stabile Lösung hat es sich jedoch erwiesen, wenn der erste Zahnkranz und der zweite Zahnkranz durch denselben Antrieb antreibbar sind.

Konstruktiv am einfachsten und für die Funktion ausreichend ist es, wenn der ersten Zahnkranz und der zweite Zahnkranz an einer einheitlich angetriebenen Antriebsradeinheit angeordnet sind, so daß beide Zahnkränze sich gemeinsam drehen. Dies vereinfacht insbesondere das Vorsehen von Lagern für die Zahnkränze, die somit beide über ein gemeinsames Lager gelagert werden können.

Als besonders günstig hat es sich dabei erwiesen, wenn die Antriebsradeinheit auf einer gemeinsamen Welle sitzt und über diese in dem Werkzeugträger gelagert ist.

Ein besonders einfacher Aufbau einer derartigen Antriebseinheit sieht vor, daß die Antriebsradeinheit zwei miteinander verbundene Antriebszahnräder umfaßt, wobei jeweils eines der Antriebszahnräder einen der Zahnkränze trägt.

Eine Möglichkeit den ersten und den zweiten Zahnkranz und die werkzeughalterseitigen Zahnräder anzuordnen ist die, daß die Zahnradachse quer zur Zahnkranzachse verläuft.

Hinsichtlich der Ausbildung der Antriebszahnräder und der werkzeughalterseitigen Zahnräder wurden bislang keine näheren Angaben gemacht. So wäre es prinzipiell denkbar, Kegelräder einzusetzen.

Eine zweckmäßige Lösung sieht jedoch vor, daß mindestens ein Zahnkranz als Zahnkranz eines Kronenrades und das entsprechende werkzeughalterseitige Zahnrad als zylindrisches Zahnritzel ausgebildet sind. Diese Lösung hat den Vorteil, daß ein derartiges zylindrisches Zahnritzel hinsichtlich seiner Relativposition in radialer Richtung zum Kronenrad positionsunempfindlich ist, wodurch sich in einfacher Weise alle Toleranzprobleme hinsichtlich der durch den Werkzeughalter festgelegten radialen Position von dessen Zahnrad vermeiden lassen.

Besonders günstig ist es, wenn beide Zahnkränze als Zahnkranz eines Kronenrades ausgebildet sind und die jeweils entsprechenden werkzeughalterseitigen Zahnräder als zylindrische Zahnritzel.

Eine weitere Möglichkeit der Anordnung der Zahnräder und der Zahnkränze ist die, daß die Zahnradachse parallel zur Zahnkranzachse verläuft.

In diesem Fall ist vorzugsweise vorgesehen, daß die Zahnkränze als Zahnkränze von Stirnrädern ausgebildet sind und daß die werkzeughalterseitigen Zahnräder zylindrische Zahnritzel sind.

Eine vorteilhafte Variante sieht vor, daß der erste Zahnkranz und der zweite Zahnkranz dieselbe Zähnezahl, jedoch unterschiedliche Module aufweisen, so daß dadurch die Möglichkeit besteht, in einfacher Weise Übersetzungsverhältnisse entsprechend der Größe der werkzeughalterseitigen Zahnräder auszuwählen.

Prinzipiell könnte ein erfindungsgemäßer Werkzeugträger so ausgebildet sein, daß er eine Aufnahme für einen Werkzeughalter aufweist. Besonders vorteilhaft ist es jedoch, wenn der erfindungsgemäße Werkzeugträger mindestens zwei Aufnahmen für Werkzeughalter aufweist und daß sowohl der erste Zahnkranz als auch der zweite Zahnkranz so im Werkzeugträger angeordnet sind, daß mit diesen ein Antrieb eines ersten bzw. zweiten Zahnrades eines in der ersten Aufnahme angeordneten Werkzeughalters und/oder eines in der zweiten Aufnahme angeordneten Werkzeughalters realisierbar ist.

Besonders günstig ist es, wenn die Aufnahmen für die Werkzeughalter einen derartigen Abstand voneinander aufweisen, daß die zweiten Zahnräder an in beiden Aufnahmen angeordneten Werkzeughaltern kollisionsfrei drehbar sind.

Eine besonders vorteilhafte Lösung eines erfindungsgemäßen Werkzeugträgers sieht vor, daß dieser eine Vielzahl von in azimutaler Richtung um die Zahnkranzachse angeordneten Aufnahmen für Werkzeughalter aufweist.

Weitere Merkmale und Vorteile der Erfindung sind Gegenstand der nachfolgenden Beschreibung sowie der zeichnerischen Darstellung einiger Ausführungsformen der Erfindung.

In der Zeichnung zeigen:
- Fig. 1: einen Schnitt durch eine erste Ausführungsform einer erfindungsgemäßen Werkzeuganordnung, umfassend einen Werkzeughalter und einen Werkzeugträger, wobei der Werkzeughalter mit einem ersten Übersetzungsverhältnis angetrieben ist;
- Fig. 2: einen Schnitt entsprechend Fig. 1, wobei der Werkzeughalter mit einem zweiten Übersetzungsverhältnis angetrieben ist;
- Fig. 3: einen Schnitt längs Linie 3-3 in Fig. 1;
- Fig. 4: einen Schnitt ähnlich Fig. 1 durch den Werkzeugträger und eine Werkzeugträgeraufnahme bei der ersten Ausführungsform;
- Fig. 5: einen Schnitt durch eine zweite Ausführungsform einer erfindungsgemäßen Werkzeuganordnung, wobei der Werkzeughalter mit dem ersten Übersetzungsverhältnis angetrieben ist;
- Fig. 6: einen Schnitt entsprechend Fig. 5 der zweiten Ausführungsform, wobei der Werkzeughalter mit dem zweiten Übersetzungsverhältnis angetrieben ist und
- Fig. 7: einen Schnitt längs Linie 7-7 in Fig. 5.

Eine erste Ausführungsform einer erfindungsgemäßen Werkzeuganordnung umfaßt einen als Ganzes mit 10 bezeichneten Werkzeugrevolver, welcher an einer Revolveraufnahme 12 mittels eines Drehlagers 14 um eine Revolverachse 16 drehbar gelagert ist.

Der Werkzeugrevolver 10, welcher einen Werkzeugträger darstellt, umfaßt als Werkzeugträgergehäuse ein Revolvergehäuse 18, welches eine Trägerscheibe 20 mit Werkzeughalteraufnahmen 22 und 24 aufweist, an welchen Werkzeughalter 30 mit Halteelementen 32 und 34 fixierbar sind.

Jeder der Werkzeughalter 30 umfaßt dabei ein Werkzeughaltergehäuse 40, welches einerseits die Halteelemente 32 und 34 zur Fixierung desselben an der Trägerscheibe 20 trägt, und andererseits an einem dem Revolvergehäuse 18 zugewandten Ende einen Gehäuseansatz 42 aufweist, welcher in einer radial zur Revolverachse 16 verlaufenden Einsetzrichtung 44 in einen Durchbruch 46 einsetzbar ist, der in einem zylindrisch um die Revolverachse 16 herum verlaufenden Mantel 48 des Revolvergehäuses 18 angeordnet ist.

In dem Werkzeughaltergehäuse 40 ist eine als Ganzes mit 50 bezeichnete Werkzeugspindel mittels vorderen Spindellagern 52 und einem hinteren Spindellager 54 drehbar um eine Spindelachse 56 gelagert. Die Werkzeugspindel 50 weist an ihrem vorderen, dem Revolvergehäuse 18 abgewandten Ende 58 eine Werkzeugaufnahme 60 für ein rotierend antreibbares Werkzeug 61 auf, wobei die Werkzeugaufnahme 60 beispielsweise eine konische Aufnahme darstellt.

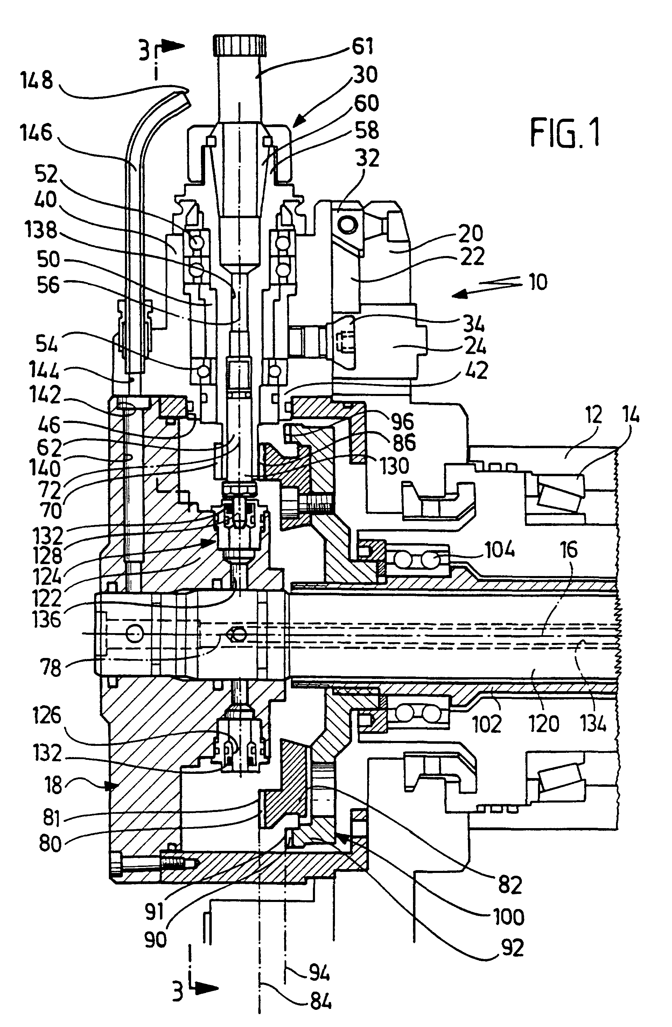

Die Werkzeugspindel 50 ist ferner mit einer sich von dieser, beispielsweise ausgehend von dem hinteren Spindellager 54 ,in Richtung der Revolverachse 16 erstreckende Werkzeugantriebswelle 62 verbunden, welche im Fall des in Fig. 1 dargestellten Werkzeughalters 30 mit einem ersten werkzeughalterseitigen Zahnrad 70 versehen ist, das um eine zur Spindelachse 56 koaxiale Zahnradachse 72 drehbar ist, um über die Werkzeugantriebswelle 62 die Werkzeugspindel 50 anzutreiben.

Zum Antrieb des ersten Zahnrads 70 ist in dem Revolvergehäuse 18 ein um eine zur Revolverachse 16 koaxiale Zahnkranzachse 78 auf einer Bahn 81 bewegbarer erster Zahnkranz 80 vorgesehen, welcher so ausgebildet ist, daß er das als zylindrisches Zahnritzel ausgebildete erste Zahnrad 70 antreibt. Vorzugsweise ist der erste Zahnkranz 80 als Zahnkranz eines ersten Kronenrades 82 ausgebildet, das um die Zahnkranzachse 78 rotierend angeordnet ist, so daß die Bahn 81, auf welcher sich der Zahnkranz 80 bewegt, in einer Ebene 84 liegt, welche sich parallel zur Zahnradachse 72 erstreckt, und einen Eingriffbereich 86 aufweist, in welchem der Zahnkranz 80 mit dem ersten Zahnrad 70 in Eingriff steht.

Das erste Kronenrad 82 ist dabei fest mit einem zweiten Kronenrad 92 verbunden, das einen zweiten Zahnkranz 90 trägt, welcher sich auf einer ebenfalls koaxial zur Zahnkranzachse 78 verlaufenden Bahn 91 bewegt, die in einer zweiten Ebene 94 verläuft, welche parallel zur Zahnradachse 70, jedoch in einem größeren Abstand von der Zahnradachse 70 verläuft als die erste Ebene 84. Darüber hinaus verläuft die Bahn 91 des zweiten Zahnkranzes 90 bezüglich der Zahnkranzachse 78 radial außerhalb der Bahn 81 des ersten Zahnkranzes 80 und weist somit einen Eingriffsbereich 96 für ein zur Zahnradachse 72 koaxial angeordnetes und auf der Werkzeugantriebswelle 62 sitzendes zweites Zahnrad auf, welcher gegenüber dem Eingriffbereich 86 des ersten Zahnkranzes 80 mit dem ersten Zahnrad 70 in Richtung des Werkzeughalters 30 versetzt angeordnet ist.

Vorzugsweise bilden das erste Kronenrad 82 und das zweite Kronenrad 92 eine Antriebsradeinheit 100, welche über eine koaxial zur Revolverachse 16 angeordnete Hohlwelle 102 antreibbar ist, die ihrerseits mittels eines Lagers 104 drehbar in dem Revolvergehäuse 18 angeordnet ist.

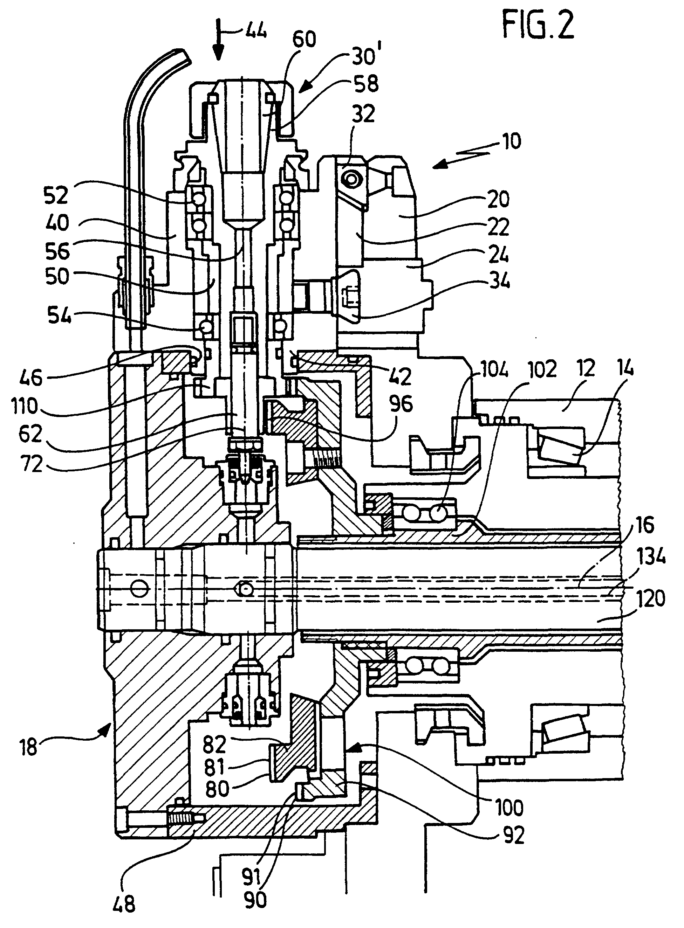

Wird nun, wie in Fig. 2 dargestellt, ein anstelle des Werkzeughalters 30 ein Werkzeughalter 30' eingesetzt, welcher ein als zylindrisches Zahnritzel ausgebildetes zweites Zahnrad 110 trägt, das so ausgebildet und angeordnet ist, daß es mit dem zweiten Zahnkranz 90 in dessen Eingriffsbereich 96 in Eingriff steht und das erste Zahnrad 70 ersetzt, so erfolgt ein Antrieb der Werkzeugantriebswelle 62 über den zweiten Zahnkranz 90 des zweiten Kronenrades 92 und das zweite Zahnrad 110 anstelle des Antriebs der Werkzeugantriebswelle 62 bei dem in Fig. 1 dargestellten Werkzeughalter 30 über den ersten Zahnkranz 80 und das erste Zahnrad 70.

Vorzugsweise sind der erste Zahnkranz 80 und der zweite Zahnkranz 90 so ausgebildet, daß sie dieselbe Zähnezahl aufweisen, sich jedoch hinsichtlich ihres Moduls unterscheiden, wobei das Übersetzungsverhältnis beim Antrieb der Werkzeugantriebswelle 62 über den ersten Zahnkranz 80 und das erste Zahnrad 70 einen Faktor 2 größer ist als das Übersetzungsverhältnis beim Antrieb der Werkzeugantriebswelle 62 über den zweiten Zahnkranz 90 und das zweite Zahnrad 110.

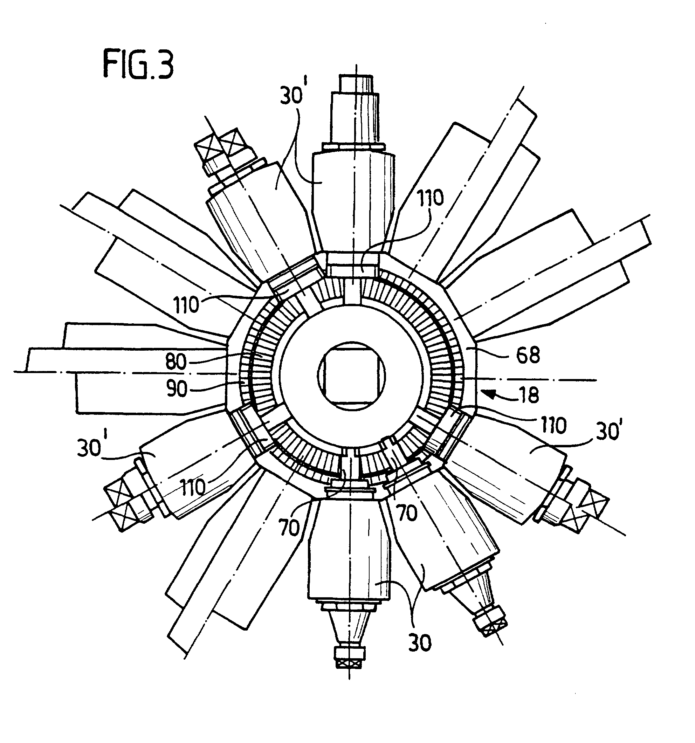

Der Revolver 10 ist ferner - wie in Fig. 3 dargestellt - so ausgebildet, daß das Revolvergehäuse 18 in Azimutalrichtung zur Revolverachse 16 aufeinanderfolgend angeordnete Durchbrüche aufweist, in welche Werkzeughalter 30 oder 30' einsetzbar sind, wobei jeder Werkzeughalter 30 oder 30' entweder mit einem ersten Zahnrad 70 oder einem zweiten Zahnrad 110 versehen sein kann, das dann entweder mit dem ersten Zahnkranz 80 oder mit dem zweiten Zahnkranz 90 in Eingriff bringbar ist, so daß ein Antrieb der Antriebsradeinheit 100 über die Hohlwelle 102 gleichzeitig zu einem Antrieb sämtlicher Werkzeugspindeln 50 in sämtlichen Werkzeughaltern 30 oder 30' führt.

Dabei sind die azimutalen Abstände der Werkzeughalter 30 oder 30' so gewählt, daß die ersten Zahnräder 70 oder die zweiten Zahnräder 110 derselben störungsfrei in dem Revolvergehäuse 18 mit dem ersten Zahnkranz 80 oder dem zweiten Zahnkranz 90 in Eingriff bringbar sind.

Ferner ist vorzugsweise die Werkzeugantriebswelle 62 der Werkzeughalter 30 oder 30' so ausgebildet, daß das Zahnrad 70 oder 110 auf dieser auswechselbar montierbar ist, so daß je nach Einsatzfall durch Auswechseln des jeweiligen Zahnrades das Übersetzungsverhältnis für den Antrieb der Werkzeugspindel 50 und somit des Werkzeugs 61 zwischen den zwei Übersetzungsverhältnissen wählbar ist.

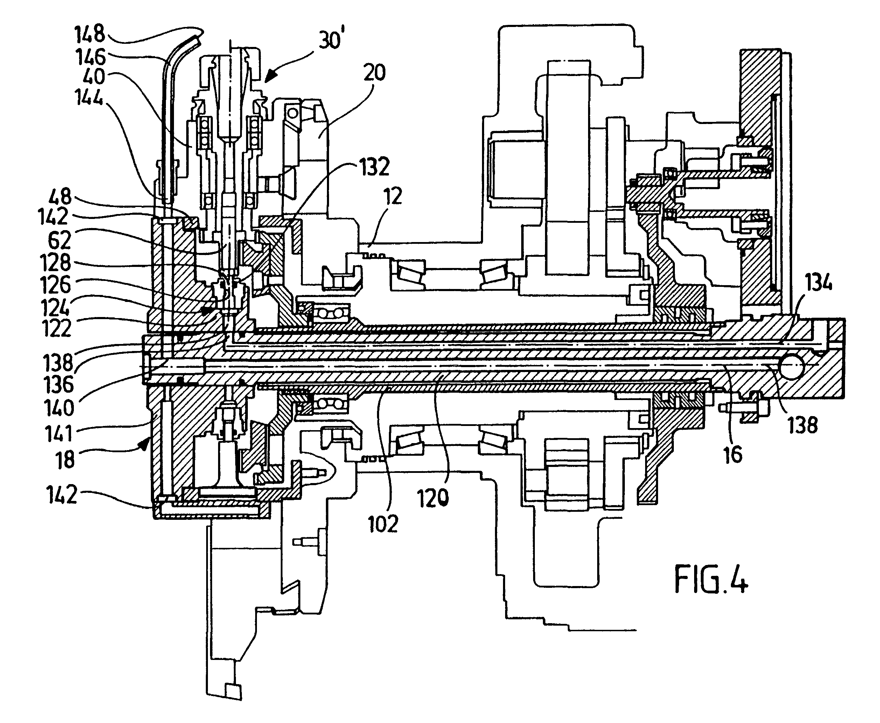

Zur Kühlmittelversorgung ist, wie in Fig. 1, 2 und 4 dargestellt, vorzugsweise innerhalb der Hohlwelle 102 ein Versorgungsrohr 120 vorgesehen, welches sich ausgehend von der Revolveraufnahme 12 durch die Hohlwelle 102 hindurch und über diese hinaus erstreckt und dabei mit einem Anschlußkörper 122 verbunden ist, welcher eine der Zahl der im Revolver 10 möglichen Werkzeughalter 30 oder 30' entsprechende Anzahl von Kühlmittelanschlußeinheiten 124 trägt, welche stationär im Revolvergehäuse 18 angeordnet sind und sich in radialer Richtung zur Revolverachse 16 und koaxial zur Zahnradachse 72 erstreckende Anschlußaufnahmen 126 für einen Kühlmittelübertragungszapfen 128 aufweist, welcher an einem dem Anschlußkörper 122 zugewandten Ende 130 der jeweiligen Werkzeugantriebswelle 62 angeordnet ist.

Die Kühlmittelübertragungszapfen 128 werden dabei vorzugsweise durch eine in den Anschlußaufnahmen 126 vorgesehene umlaufende Dichtung 132 umfangsseitig abgedichtet.

Zur Zufuhr von Kühlmittel zu den Kühlmittelanschlußeinheiten 124 ist das Versorgungsrohr 120 mit einem Versorgungskanal 134 versehen, von welchem ein Querkanal 136 abzweigt, der über einen Ringkanal 138 zu den jeweiligen Anschlußaufnahmen 126 für die jeweiligen Kühlmittelübertragungszapfen 128 führt. Ferner führt ein Kühlmittelkanal 138 von dem jeweiligen Kühlmittelübertragungszapfen 128 durch die Werkzeugantriebswelle 62 und auch durch die Spindel 50 hindurch bis zu der Werkzeugaufnahme 60 führt über welche das Kühlmittel dann in das Werkzeug eintritt.

Zusätzlich ist mit einem weiteren Versorgungskanal 138 in dem Versorgungsrohr 120 auch noch eine zum jeweiligen Werkzeughaltergehäuse 40 geführte Schmiermittelzufuhr speisbar, welche vom Versorgungskanal 138 abzweigende und in einer Frontplatte 141 des Revolvergehäuses 18 verlaufende Querkanäle 140 aufweist, deren Mündungsöffnung 142 in dem Mantel 48 des Revolvergehäuses 18 liegt und an welche sich dann ein Schmiermittelkanal 144 anschließt, der sich im Werkzeughaltergehäuse 40 erstreckt und in ein Schmiermittelzufuhrrohr 146 übergeht, dessen Mündungsöffnung 148, beispielsweise ausgebildet als Sprühkopf, einem einzusetzenden Werkzeug 61 zugewandt angeordnet ist.

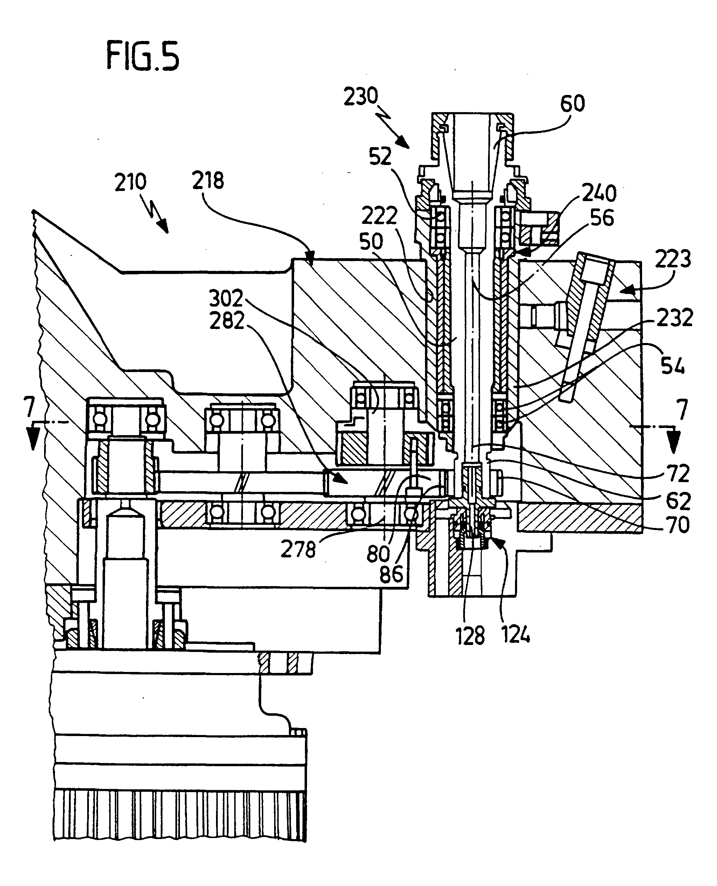

Bei einer zweiten Ausführungsform einer erfindungsgemäßen Werkzeuganordnung, dargestellt in den Fig. 5 bis 7, stellt ein Bohrapparat 210 den Werkzeugträger dar und dessen Gehäuse 218 bildet das Werkzeugträgergehäuse, das beispielsweise entweder stationär an einer Werkzeugmaschine oder auf einem Schlitten einer Werkzeugmaschine angeordnet ist.

Das Werkzeugträgergehäuse 18 ist seinerseits mit einer Werkzeughalteraufnahme 222 versehen, welche als Bohrung in dem Werkzeugträgergehäuse 218 ausgebildet ist.

Diese Werkzeughalteraufnahme 222 ist ein Werkzeughalter 230 mit einem Schaftbereich 232 seines Werkzeughaltergehäuses 240 einsetzbar und beispielsweise mittels einer Fixiereinrichtung 223 fixierbar.

In dem Werkzeughaltergehäuse 240 ist ebenfalls eine Werkzeugspindel 50 angeordnet, welche um die Werkzeugspindelachse 56 drehbar in einem vorderen Spindellager 52 und einem hinteren Spindellager 54 in dem Werkzeughaltergehäuse 240 gelagert ist.

In Fortsetzung der Werkzeugspindel 50 über das hintere Spindellager 54 hinaus ist ferner auf einer der Werkzeugaufnahme 60 gegenüberliegenden Seite der Werkzeugspindel 50 die Werkzeugantriebswelle 62 vorgesehen, welche im Fall des Werkzeughalters 230 das erste Zahnrad 70 trägt, das um die Zahnradachse 72, welche koaxial zur Spindelachse 56 angeordnet ist, drehbar ist.

Dieses erste Zahnrad 70 ist bei in die Werkzeughalteraufnahme 222 eingesetztem Werkzeughalter 230 in Eingriff mit dem ersten Zahnkranz 80 welcher um eine Zahnkranzachse 278 rotierend in dem Werkzeugträgergehäuse 218 angeordnet ist.

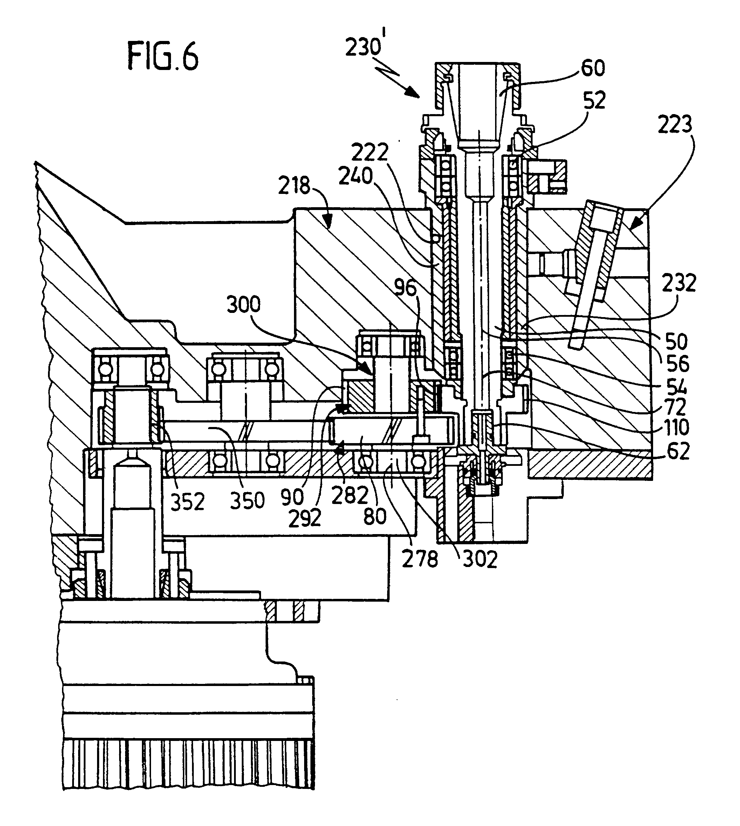

Alternativ zum ersten Zahnrad 70 ist, wie in Fig. 6 dargestellt, auf die Werkzeugantriebswelle 62 das zweite Zahnrad 110 aufsetzbar, welches mit dem zweiten Zahnkranz 90 in Eingriff bringbar ist.

Auch der zweite Zahnkranz 90 ist in gleicher Weise wie der erste Zahnkranz 80 um die Zahnkranzachse 278 drehbar, die allerdings bei dieser Ausführungsform der erfindungsgemäßen Lösung nicht senkrecht zur Zahnradachse 72 verläuft, sondern parallel zu dieser. Aus diesem Grund ist das den ersten Zahnkranz 80 tragende erste Zahnrad 282 nicht als Kronenrad, sondern als Stirnrad ausgebildet und das den zweiten Zahnkranz 90 tragende Zahnrad 292 ebenfalls als Stirnrad ausgebildet.

Sowohl das erste Zahnrad 282 als auch das zweite Zahnrad 292 bilden insgesamt die Antriebsradeinheit 300, welche in dem Werkzeugträgergehäuse 218 auf der Welle 302 drehbar gelagert ist.

In gleicher Weise wie bei der ersten Ausführungsform ist wechselweise je nach dem, ob der Werkzeughalter 230 gemäß Fig. 5 oder der Werkzeughalter 230' gemäß Fig. 6 mit dem ersten Zahnrad 70 bzw. dem zweiten Zahnrad 110 versehen ist, ein Antrieb der Werkzeugantriebswelle 62 mit unterschiedlicher Übersetzung durch die Antriebsradeinheit 300 möglich, wobei ebenfalls vorzugsweise in gleicher Weise wie bei der ersten Ausführungsform die Übersetzung zwischen dem ersten Zahnkranz 80 und dem Zahnrad 70 um einen Faktor 2 größer ist als zwischen dem zweiten Zahnkranz 90 und dem zweiten Zahnrad 110.

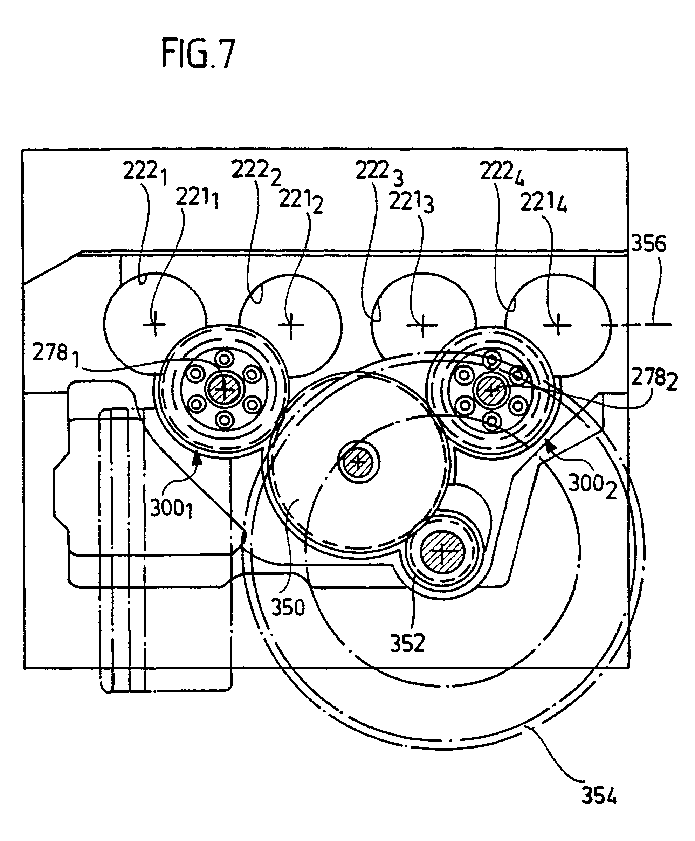

Im Gegensatz zu der ersten Ausführungsform erfolgt, wie in Fig. 7 dargestellt, der Antrieb der Antriebsradeinheit 300 über ein Zwischenrad 350, das seinerseits über ein Motorritzel 352 eines Antriebsmotors 354 angetrieben ist.

Vorzugsweise sind bei dem Bohrapparat eine Vielzahl von Werkzeughalteraufnahmen 222₁ bis 222₄ vorgesehen, welche alle symmetrisch zu einer Ebene 356 und mit ihren Achsen 221₁ bis 221₄ parallel zueinander ausgerichtet sind, wobei die Achsen 221₁ bis 221₄ in Richtung der Ebene 356 konstante Abstände voneinander aufweisen.

Zum Antrieb mehrerer Werkzeughalter 230 oder 230' ist jeweils zwei nebeneinanderliegenden Werkzeughalteraufnahmen 222₁ und 222₂ bzw. 222₃und 222₄ eine Antriebseinheit, nämlich die Antriebseinheit 300₁ bzw. 300₂, zugeordnet, die beide wieder über das Zwischenrad 350 gemeinsam antreibbar sind.

Somit kann in jede der Werkzeughalteraufnahmen 221₁ bis 221₄ einer der Werkzeughalter 230 oder 230' mit einem Zahnrad 70 bzw. 110 eingesetzt werden und es erfolgt jeweils ein Antrieb über das Antriebsrad 300₁ oder das Antriebsrad 300₂ entsprechend den durch das eingesetzte Zahnrad 70 oder 110 festgelegten Übersetzungsverhältnissen.

Darüber hinaus ist, wie in Fig. 5 und 6 dargestellt, auch bei den Werkzeughaltern 230 oder 230' ein Kühlmittelübertragungszapfen 128 vorgesehen, welcher in eine für jeden Werkzeughalter 230, 230' vorgesehene Aufnahme 124 einsetzbar ist, die in diesem Fall für jede der Werkzeughalteraufnahmen 222₁ bis 222₄ in dem Werkzeugträgergehäuse 218 vorgesehen ist.

## Patentansprüche

1. Werkzeuganordnung für rotierend angetriebene Werkzeuge von Werkzeugmaschinen, umfassend einen Werkzeughalter (30, 30'; 230, 230') für das rotierend angetriebene Werkzeug (61) mit einem Werkzeughaltergehäuse (40, 240) in welchem eine Werkzeugspindel (50) drehbar gelagert ist und einen Werkzeugträger (10, 210), mit einer an dem Werkzeugträger (10, 210) vorgesehenen Aufnahme (22, 24; 222) für mindestens einen der Werkzeughalter (30, 30', 230, 230'), mit einem am Werkzeugträger (10, 210) vorgesehenen, um eine Zahnkranzachse (78, 278) auf einer ersten Bahn (81) umlaufend bewegbaren ersten Zahnkranz (80), wobei die erste Bahn (81) einen einer Zahnradachse (72) nächstliegenden ersten Eingriffbereich (86) für ein wekzeughalterseitiges Zahnrad (70) aufweist, mit einem an dem Werkzeugträger (10; 210) um die Zahnkranzachse (78; 278) auf einer zweiten Bahn (91) umlaufend bewegbaren zweiten Zahnkranz (90), wobei die zweite Bahn (91) einen der Zahnradachse (72) nächstliegenden zweiten Eingriffbereich (96) für ein werkzeughalterseitiges Zahnrad (110) aufweist, der in einem größeren radialen Abstand von der Zahnradachse (72) verläuft als der erste Eingriffbereich (86) und der in Richtung der Zahnradachse (72) näher an der Werkzeugaufnahme (60) des Werkzeughalters (30, 30'; 230, 230') liegt als der erste Eingriffbereich (86),
**dadurch gekennzeichnet, daß** der Werkzeughalter (30, 30'; 230, 230') entweder mit einem ersten auf einer Seite des Werkzeughaltergehäuses (40, 240) angeordneten und um die Zahnradachse (72) drehbar gelagerten werkzeughalterseitigen Zahnrad (70) versehen ist, das mit dem ersten Zahnkranz (80) in Eingriff bringbar ist oder mit einem zweiten auf einer Seite des Werkzeughaltergehäuses (40, 240) angeordneten und um die Zahnradachse (72) drehbar gelagerten werkzeughalterseitigen Zahnrad (110) versehen ist, das mit dem zweiten Zahnkranz (90) in Eingriff bringbar ist.

2. Werkzeuganordnung nach Anspruch 1, **dadurch gekennzeichnet, daß** die am Werkzeughalter (30, 30'; 230, 230') angeordneten Zahnräder (70, 110) gegeneinander auswechselbar sind.

3. Werkzeuganordnung nach Anspruch 2, **dadurch gekennzeichnet, daß** sowohl das erste Zahnrad (70) als auch das zweite Zahnrad (110) auf einer mit der Werkzeugspindel (50) gekoppelten Werkzeugantriebswelle (62) auswechselbar fixierbar sind.

4. Werkzeuganordnung nach einem der Ansprüche 1 bis 3, **dadurch gekennzeichnet, daß** die Werkzeugantriebswelle (72) an ihrem dem Werkzeughalter (30, 30'; 230, 230') abgewandten Ende mit einem Kühlmittelzufuhranschluß (128) versehen ist, welcher bei in der Aufnahme (22; 222) fixiertem Werkzeughalter (30, 30'; 230, 230') mit einer am Werkzeugträger angeordneten Anschlußaufnahme (126) verbunden ist.

5. Werkzeuganordnung nach Anspruch 4, **dadurch gekennzeichnet, daß** der Kühlmittelzufuhranschluß als Kühlmittelübertragungszapfen (128) ausgebildet ist und rotierend in der Kühlmittelanschlußaufnahme (126) aufgenommen ist.

6. Werkzeuganordnung nach einem der voranstehenden Ansprüche, **dadurch gekennzeichnet, daß** die Werkzeugantriebswelle (62) koaxial zur Werkzeugspindel (50) angeordnet ist.

7. Werkzeuganordnung nach Anspruch 6, **dadurch gekennzeichnet, daß** die Werkzeugantriebswelle (62) und die Werkzeugspindel (50) von einem gemeinsamen Kühlmittelkanal (138) durchsetzt sind, welcher von dem Kühlmittelzufuhranschluß (128) zu dem Werkzeug (61) führt.

8. Werkzeuganordnung nach einem der voranstehenden Ansprüche, **dadurch gekennzeichnet, daß** der erste Zahnkranz (80) und der zweite Zahnkranz (90) durch denselben Antrieb (102; 302) antreibbar sind.

9. Werkzeuganordnung nach Anspruch 8, **dadurch gekennzeichnet, daß** der erste Zahnkranz (80) und der zweite Zahnkranz (90) an einer einheitlich angetriebenen Antriebsradeinheit (100; 300) angeordnet sind.

10. Werkzeuganordnung nach Anspruch 9, **dadurch gekennzeichnet, daß** die Antriebsradeinheit (100, 300) auf einer gemeinsamen Welle (102; 302) sitzt und über diese in dem Werkzeugträger (10; 210) gelagert ist.

11. Werkzeuganordnung nach Anspruch 10, **dadurch gekennzeichnet, daß** die Antriebsradeinheit (100, 300) zwei miteinander verbundene Antriebszahnräder (82, 92; 282, 292) umfaßt.

12. Werkzeuganordnung nach einem der voranstehenden Ansprüche, **dadurch gekennzeichnet, daß** die Zahnradachse (72) quer zur Zahnkranzachse (78) verläuft.

13. Werkzeuganordnung nach Anspruch 12, **dadurch gekennzeichnet, daß** mindestens ein Zahnkranz (80, 90) als Zahnkranz eines Kronenrades (82, 92) und das entsprechende werkzeughalterseitige Zahnrad (70, 110) als zylindrisches Zahnritzel ausgebildet sind.

14. Werkzeuganordnung nach Anspruch 13, **dadurch gekennzeichnet, daß** beide Zahnkränze (80, 90) als Zahnkranz eines Kronenrades (82, 92) ausgebildet sind und die jeweils entsprechenden werkzeughalterseitigen Zahnräder (70, 110) als zylindrische Zahnritzel.

15. Werkzeuganordnung nach einem der Ansprüche 1 bis 11, **dadurch gekennzeichnet, daß** die Zahnradachse (72) parallel zur Zahnkranzachse (278) verläuft.

16. Werkzeuganordnung nach Anspruch 15, **dadurch gekennzeichnet, daß** die Zahnkränze (80, 90) als Zahnkränze von Stirnrädern (282, 292) ausgebildet sind und die werkzeughalterseitigen Zahnräder (70, 100) zylindrische Zahnritzel sind.

17. Werkzeuganordnung nach einem der voranstehenden Ansprüche, **dadurch gekennzeichnet, daß** dieser mindestens zwei Aufnahmen (22; 222) für Werkzeughalter (30, 30'; 230, 230') aufweist und daß sowohl der erste Zahnkranz (80) als auch der zweite Zahnkranz (90) so im Werkzeugträger (10; 210) angeordnet sind, daß mit diesen ein Antrieb eines ersten bzw. zweiten Zahnrades (70, 110) eines in der ersten Aufnahme (22; 222) angeordneten Werkzeughalters (30, 30'; 230, 230') und/oder eines in der zweiten Aufnahme (22; 222) angeordneten Werkzeughalters (30, 30'; 230, 230') realisierbar ist.

18. Werkzeuganordnung nach Anspruch 17, **dadurch gekennzeichnet, daß** die Aufnahmen (22, 222) für die Werkzeughalter (30, 30'; 230, 230') einen derartigen Abstand voneinander aufweisen, daß das die zweiten Zahnräder (110) von in beiden Aufnahmen (22, 222) angeordneten Werkzeughaltern (30'; 230') kollisionsfrei drehbar sind.

19. Werkzeuganordnung nach Anspruch 17 oder 18, **dadurch gekennzeichnet, daß** der Werkzeugträger (10) eine Vielzahl von in azimutaler Richtung um die Zahnkranzachse (78) angeordneten Aufnahmen (22) für den Werkzeughalter (30, 30') aufweist.

20. Werkzeuganordnung nach Anspruch 18 oder 19, **dadurch gekennzeichnet, daß** der Werkzeugträger (210) eine Vielzahl von in einer Ebene (356) nebeneinanderliegenden Werkzeugaufnahmen (222) aufweist.

## Claims

1. Tool assembly for rotationally driven tools of machine tools, comprising a tool holder (30, 30'; 230, 230') for the rotationally driven tool (61) with a tool holder housing (40, 240), a tool spindle (50) being mounted in said housing for rotation, and a tool support (10, 210), with a receiving means (22, 24; 222) provided on the tool support (10, 210) for at least one of the tool holders (30, 30', 230, 230'), with a first toothed ring (80) provided on the tool support (10, 210) and movable about a toothed ring axis (78, 278) so as to be moveable on a first path (81), wherein the first path (81) has a first area of engagement (86) located closest to a gear wheel axis (72) for a gear wheel (70) on the tool holder side, with a second toothed ring (90) on the tool support (10; 210) movable about the toothed ring axis (78; 278) so as to be moveable on a second path (91), wherein the second path (91) has a second area of engagement (96) located closest to the gear wheel axis (72) for a gear wheel (110) on the tool holder side, said second area of engagement extending at a greater radial distance from the gear wheel axis (72) than the first area of engagement (86) and being located closer to the tool receiving means (60) of the tool holder (30, 30'; 230, 230') in the direction of the gear wheel axis (72) than the first area of engagement (86),
**characterized in that** the tool holder (30, 30'; 230, 230') is either provided with a first gear wheel (70) on the tool holder side, said first gear wheel being arranged on one side of the tool holder housing (40, 240), being mounted for rotation about the gear wheel axis (72) and being adapted to be brought into engagement with the first toothed ring (80), or is provided with a second gear wheel (110) on the tool holder side, said second gear wheel being arranged on one side of the tool holder housing (40, 240), being mounted for rotation about the gear wheel axis (72) and being adapted to be brought into engagement with the second toothed ring (90).

2. Tool assembly as defined in claim 1, **characterized in that** the gear wheels (70, 110) arranged on the tool holder (30, 30'; 230, 230') are interchangeable with one another.

3. Tool assembly as defined in claim 2, **characterized in that** not only the first gear wheel (70) but also the second gear wheel (110) are adapted to be fixed interchangeably on a tool drive shaft (62) coupled to the tool spindle (50).

4. Tool assembly as defined in any one of claims 1 to 3, **characterized in that** the tool drive shaft (72) is provided at its end facing away from the tool holder (30, 30'; 230, 230') with a coolant supply connection (128) connected to a connection receiving means (126) arranged on the tool support when a tool holder (30, 30'; 230, 230') is fixed in the receiving means (22; 222).

5. Tool assembly as defined in claim 4, **characterized in that** the coolant supply connection is designed as a coolant transfer pin (128) and is accommodated rotationally in the coolant connection receiving means (126).

6. Tool assembly as defined in any one of the preceding claims, **characterized in that** the tool drive shaft (62) is arranged coaxially to the tool spindle (50).

7. Tool assembly as defined in claim 6, **characterized in that** the tool drive shaft (62) and the tool spindle (50) are penetrated by a common coolant channel (138) leading from the coolant supply connection (128) to the tool (61).

8. Tool assembly as defined in any one of the preceding claims, **characterized in that** the first toothed ring (80) and the second toothed ring (90) are drivable by the same drive (102; 302).

9. Tool assembly as defined in claim 8, **characterized in that** the first toothed ring (80) and the second toothed ring (90) are arranged on a drive wheel unit (100; 300) driven uniformly.

10. Tool assembly as defined in claim 9, **characterized in that** the drive wheel unit (100, 300) is seated on a common shaft (102; 302) and mounted via this in the tool support (10; 210).

11. Tool assembly as defined in claim 10, **characterized in that** the drive wheel unit (100, 300) comprises two drive gear wheels (82, 92; 282, 292) connected to one another.

12. Tool assembly as defined in any one of the preceding claims, **characterized in that** the gear wheel axis (72) extends transversely to the toothed ring axis (78).

13. Tool assembly as defined in claim 12, **characterized in that** at least one toothed ring (80, 90) is designed as a toothed ring of a crown wheel (82, 92) and the corresponding gear wheel (70, 110) on the tool holder side as a cylindrical pinion.

14. Tool assembly as defined in claim 13, **characterized in that** both toothed rings (80, 90) are designed as a toothed ring of a crown wheel (82, 92) and the respectively corresponding gear wheels (70, 110) on the tool holder side as cylindrical pinions.

15. Tool assembly as defined in any one of claims 1 to 11, **characterized in that** the gear wheel axis (72) extends parallel to the toothed ring axis (278).

16. Tool assembly as defined in claim 15, **characterized in that** the toothed rings (80, 90) are designed as toothed rings of spur wheels (282, 292) and the gear wheels (70, 100) on the tool holder side are cylindrical pinions.

17. Tool assembly as defined in any one of the preceding claims, **characterized in that** this has at least two receiving means (22; 222) for tool holders (30, 30'; 230, 230') and that not only the first toothed ring (80) but also the second toothed ring (90) are arranged in the tool support (10; 210) such that with them a drive of a first and second gear wheel (70, 110), respectively, of a tool holder (30, 30'; 230, 230') arranged in the first receiving means (22; 222) and/or of a tool holder (30; 30'; 230, 230') arranged in the second receiving means (22; 222) can be realized.

18. Tool assembly as defined in claim 17, **characterized in that** the receiving means (22, 222) for the tool holders (30, 30'; 230, 230') have such a distance from one another that the second gear wheels (110) of tool holders (30'; 230') arranged in both receiving means (22, 222) are rotatable free from collision.

19. Tool assembly as defined in claim 17 or 18, **characterized in that** the tool support (10) has a plurality of receiving means (22) for the tool holder (30, 30') arranged in azimuthal direction around the toothed ring axis (78).

20. Tool assembly as defined in claim 18 or 19, **characterized in that** the tool support (210) has a plurality of tool receiving means (222) located next to one another in a plane (356).

## Revendications

1. Ensemble support d'outils pour des outils - entraînés en rotation - de machines-outils, comprenant un porte-outils (30, 30' ; 230, 230') pour l'outil (61) entraîné en rotation et doté d'un carter de porte-outils (40 ; 240) dans lequel est montée en rotation une broche d'outil (50), et un support d'outils (10 ; 210) comprenant un logement (22, 24 ; 222) prévu sur le support d'outils (10 ; 210) pour au moins un des porte-outils (30, 30' ; 230, 230') comprenant une première couronne dentée (80) prévue sur le support d'outils (10 ; 210) et mobile de façon circulaire sur une première trajectoire (81), autour d'un axe de couronne dentée (78, 278), où la première trajectoire (81) présente une première zone d'engrènement (86) - à proximité immédiate d'un axe de roue dentée (72) - pour une roue dentée (70), côté porte-outils, comprenant une seconde couronne dentée (90) montée sur le porte-outils (10 ; 210) et mobile de façon circulaire sur une seconde trajectoire (91), autour de l'axe de couronne dentée (78 ; 278), où la seconde trajectoire (91) présente une seconde zone d'engrènement (96) - à proximité immédiate de l'axe de roue dentée (72) - pour une roue dentée (110), côté porte-outils, laquelle seconde zone d'engrènement s'étend, par rapport à l'axe de roue dentée (72), sur une distance radiale plus grande que la première zone d'engrènement (86) et qui, en direction de l'axe de roue dentée (72), est plus près du logement d'outils (60) du porte-outils (30, 30' ; 230, 230') que la première zone d'engrènement (86),
**caractérisé en ce que** le porte-outils (30, 30' ; 230, 230') est doté soit d'une première roue dentée (70), côté porte-outils, disposée sur un côté du carter de porte-outils (40 ; 240) et montée en rotation autour de l'axe de roue dentée (72), laquelle première roue dentée peut être en prise avec la première couronne dentée (80), soit d'une seconde roue dentée (110), côté porte-outils, disposée sur un côté du carter de porte-outils (40 ; 240) et montée en rotation autour de l'axe de roue dentée (72), laquelle seconde roue dentée peut être en prise avec la seconde couronne dentée (90).

2. Ensemble support d'outils selon la revendication 1, **caractérisé en ce que** les roues dentées (70, 110) disposées sur le porte-outils (30, 30' ; 230, 230') sont interchangeables l'une par rapport à l'autre.

3. Ensemble support d'outils selon la revendication 2, **caractérisé en ce que** aussi bien la première roue dentée (70) que la seconde roue dentée (110) peuvent être fixées de façon interchangeable sur un arbre d'entraînement d'outils (62) couplé à la broche d'outil (50).

4. Ensemble support d'outils selon l'une quelconque des revendications 1 à 3, **caractérisé en ce que** l'arbre d'entraînement d'outils (72) est doté, sur son extrémité placée à l'opposé du porte-outils (30, 30' ; 230, 230'), d'un raccordement d'alimentation (128) en produit de refroidissement, lequel raccordement d'alimentation, dans le cas d'un porte-outils (30, 30' ; 230, 230') fixé dans le logement (22 ; 222), est relié à un logement de raccordement (126) disposé sur le support d'outils.

5. Ensemble support d'outils selon la revendication 4, **caractérisé en ce que** le raccordement d'alimentation en produit de refroidissement est configuré comme une bonde de distribution de produit de refroidissement (128) et logé en rotation dans le logement de raccordement (126) du produit de refroidissement.

6. Ensemble support d'outils selon l'une quelconque des revendications précédentes, **caractérisé en ce que** l'arbre d'entraînement d'outils (62) est disposé de façon coaxiale par rapport à la broche d'outil (50).

7. Ensemble support d'outils selon la revendication 6, **caractérisé en ce que** l'arbre d'entraînement d'outils (62) et la broche d'outil (50) sont traversés par un conduit commun de produit de refroidissement (138) qui va du raccordement d'alimentation (128) en produit de refroidissement, jusqu'à l'outil (61).

8. Ensemble support d'outils selon l'une quelconque des revendications précédentes, **caractérisé en ce que** la première couronne dentée (80) et la seconde couronne dentée (90) peuvent être entraînées par le même entraînement (102 ; 302).

9. Ensemble support d'outils selon la revendication 8, **caractérisé en ce que** la première couronne dentée (80) et la seconde couronne dentée (90) sont disposées sur un ensemble à roues motrices (100 ; 300) entraîné de façon uniforme.

10. Ensemble support d'outils selon la revendication 9, **caractérisé en ce que** l'ensemble à roues motrices (100, 300) est monté sur un arbre commun (102 ; 302) et logé, par cet arbre commun, dans le support d'outils (10 ; 210).

11. Ensemble support d'outils selon la revendication 10, **caractérisé en ce que** l'ensemble à roues motrices (100 ; 300) comprend deux roues dentées motrices (82, 92 ; 282, 292) reliées entre elles.

12. Ensemble support d'outils selon l'une quelconque des revendications précédentes, **caractérisé en ce que** l'axe de roue dentée (72) s'étend de façon transversale par rapport à l'axe de couronne dentée (78).

13. Ensemble support d'outils selon la revendication 12, **caractérisé en ce qu'**au moins une couronne dentée (80, 90) est configurée comme une couronne dentée d'une roue à couronne (82, 92) et la roue dentée correspondante (70, 110), côté porte-outils, est configurée comme un pignon cylindrique.

14. Ensemble support d'outils selon la revendication 13, **caractérisé en ce que** les deux couronnes dentées (80, 90) sont configurées comme une couronne dentée d'une roue à couronne (82, 92) et les roues dentées correspondantes (70, 110), côté porte-outils, sont configurées respectivement comme des pignons cylindriques.

15. Ensemble support d'outils selon l'une quelconque des revendications 1 à 11, **caractérisé en ce que** l'axe de roue dentée (72) s'étend parallèlement à l'axe de couronne dentée (278).

16. Ensemble support d'outils selon la revendication 15, **caractérisé en ce que** les couronnes dentées (80, 90) sont configurées comme des couronnes dentées de roues droites (282, 292), et les roues dentées (70, 110), côté porte-outils, sont des pignons cylindriques.

17. Ensemble support d'outils selon l'une quelconque des revendications précédentes, **caractérisé en ce que** cet ensemble support d'outils présente au moins deux logements (22 ; 222) pour des porte-outils (30, 30' ; 230, 230'), et **en ce que** aussi bien la première couronne dentée (80) que la seconde couronne dentée (90) sont disposées dans le support d'outils (10 ; 210) de manière telle, qu'avec ces couronnes dentées, un entraînement d'une première ou d'une seconde roues dentées (70, 110) d'un porte-outils (30, 30' ; 230, 230') disposé dans le premier logement (22 ; 222) et/ou d'un porte-outils (30, 30' ; 230, 230') disposé dans le second logement (22 ; 222) soit réalisable.

18. Ensemble support d'outils selon la revendication 17, **caractérisé en ce que** les logements (22, 222) pour les porte-outils (30, 30' ; 230, 230') présentent un tel espacement, l'un par rapport à l'autre, que les secondes roues dentées (110) de porte-outils (30', 230') disposés dans les deux logements (22 ; 222) peuvent être en rotation sans se heurter.

19. Ensemble support d'outils selon la revendication 17 ou 18, **caractérisé en ce que** le support d'outils (10) présente un grand nombre de logements (22) prévus pour le porte-outils (30, 30') et disposés en direction azimutale autour de l'axe de couronne dentée (78).

20. Ensemble support d'outils selon la revendication 18 ou 19, **caractérisé en ce que** le support d'outils (210) présente un grand nombre de logements d'outils (222) placés les uns à côté des autres et se trouvant dans un plan (356).
